# FASCICULE DE BREVET EUROPEEN

(11) **EP 0 774 659 B1**
(45) Date de publication et mention de la délivrance du brevet: **03.11.2004**
(21) Numéro de dépôt: 96402420.2
(22) Date de dépôt: 13.11.1996
(51) Int. Cl.: G01N 23/223, G01N 23/22

(54) **Procédé d'analyse d'une solution par fluorescence X**
Verfahren zur Röntgenstrahl-Fluoreszenzanalyse einer Lösung
Method of X-ray fluorescence analysis of a solution

(30) Priorité: 15.11.1995 FR 9513533
(43) Date de publication de la demande: 21.05.1997
(73) Titulaire: COMMISSARIAT A L'ENERGIE ATOMIQUE, 75015 Paris Cédex 15 (FR); COMPAGNIE GENERALE DES MATIERES NUCLEAIRES, 78140 Velizy Villacoublay (FR)
(72) Inventeur: Benony, Gilbert, 30131 Pujaut (FR); Pouyat, Dominique, 30150 Roquemaure (FR); Davin, Thierry, 84840 Lapalud (FR)
(74) Mandataire: Poulin, Gérard

(56) Documents cités:
- FR-A- 2 718 528
- GB-A- 1 400 587
- PATENT ABSTRACTS OF JAPAN vol. 002, no. 154 (E-080), 25 Décembre 1978 & JP 53 122484 A (SHIMADZU CORP), 25 Octobre 1978,

## Description

### DOMAINE TECHNIQUE

La présente invention concerne un procédé d'analyse d'une solution par fluorescence X.

Elle s'applique notamment à l'analyse en ligne *("on line*") par fluorescence X, d'éléments présents en solution en faibles quantités, en solution.

L'invention s'applique tout particulièrement à l'analyse en ligne de solutions contenant des actinides comme par exemple l'uranium et le plutonium.

### ÉTAT DE LA TECHNIQUE ANTÉRIEURE

Dans les installations pour la préparation, l'utilisation ou le traitement de matières radioactives, il est nécessaire de connaître les concentrations de ces matières qui sont présentes dans des solutions résultant de différents procédés de traitement.

Ceci permet de connaître les performances de ces procédés et d'éviter tout envoi de ces matières vers des destinations où elles seraient indésirables.

Les éléments radioactifs que l'on cherche à suivre peuvent être couramment analysés de manière qualitative et quantitative par des appareils qui utilisent le phénomène de fluorescence X.

Pour obtenir une mesure de la concentration de ces éléments radioactifs, il est possible de prélever un échantillon représentatif d'une solution contenant ces éléments.

Pour obtenir un résultat plus rapidement, il est possible de faire circuler directement la solution dans une cellule de mesure munie d'une fenêtre qui est transparente aux rayons X.

A ce sujet, on consultera les brevets GB-A-1 400 587 et EP 53 122 484 et les documents (1), (2) et (3) qui, comme le document (4) cité par la suite, sont mentionnés à la fin de la présente description.

Des techniques connues permettent de s'affranchir d'effets diphasiques (voir le document (2)) mais seulement dans le cas de débits de fluide élevés.

En outre, les procédés connus sont susceptibles de présenter des dérives de mesure à plus ou moins long terme, ces dérives étant susceptibles d'entraîner des erreurs de mesure.

La mesure est également fonction du milieu dans lequel baignent les éléments à analyser.

De manière à s'affranchir des dérives d'appareil et des variations de milieu, il est connu d'ajouter à la solution à analyser une quantité déterminée d'un élément connu qui puisse servir de référence.

A ce sujet on consultera le document (4).

Dans bien des cas d'analyse en ligne, il n'est pas possible d'ajouter un élément à la solution sans gêner la mise en oeuvre d'un procédé de traitement.

### EXPOSÉ DE L'INVENTION

La présente invention a pour but de remédier à l'inconvénient précédent.

L'invention permet de s'affranchir de conditions de fonctionnement différentes de celles avec lesquelles l'étalonnage d'un appareil de fluorescence X a été effectué.

L'invention s'applique à l'analyse en ligne d'une solution monophasée.

Elle permet de minimiser les erreurs de mesure dues aux dérives d'appareil et de déceler des variations de milieu ou la présence d'une phase gazeuse dans la solution à analyser, à l'aide d'un élément de référence qui n'est pas en solution de sorte que la solution n'est pas polluée par cet élément de référence.

De façon précise, la présente invention a pour objet un procédé d'analyse d'une solution par fluorescence X comme défini dans la revendication 1.

Selon un premier mode de réalisation particulier du procédé objet de l'invention, les moyens de réception comprennent une canalisation dans laquelle circule la solution et qui est munie d'une fenêtre transparente aux rayonnements X d'excitation, d'analyse et de référence, cette fenêtre constituant ladite zone, l'élément de référence étant rendu solidaire de cette canalisation.

Cette canalisation peut être munie d'une cellule de mesure destinée à être traversée par la solution et portant la fenêtre, l'élément de référence étant rendu solidaire de cette cellule de mesure.

De préférence, à l'endroit où se trouve la fenêtre, cette cellule de mesure a une faible section de passage pour la solution.

Ceci permet de renouveler la solution, même à faible débit, et donc de minimiser le temps de réponse ainsi que l'encrassement de l'appareil.

Selon un deuxième mode de réalisation particulier du procédé objet de l'invention, les moyens de réception comprennent un conteneur qui est destiné à contenir la solution et qui est fait d'un matériau transparent aux rayonnements X d'excitation, d'analyse et de référence.

Ce conteneur peut être un récipient d'analyse par fluorescence X.

De préférence, l'élément de référence est une pièce mécanique faite d'un matériau métallique.

Cette pièce peut être une vis.

Dans certains cas, notamment pour l'analyse d'une solution contenant des actinides, il est avantageux d'utiliser le zirconium en tant que matériau constitutif de cette pièce.

### BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :
- la figure 1 est une vue en coupe schématique d'un mode de réalisation particulier de l'appareil permettant la mise en oeuvre du procédé selon l'invention,
- la figure 2 est une vue de face d'une cellule de mesure que comprend l'appareil de la figure 1 et dont on a retiré la fenêtre et la bride,
- la figure 3 est un spectre de fluorescence X d'une solution d'uranium avec une référence en zirconium,
- la figure 4 représente une droite d'étalonnage obtenue avec un appareil conforme à l'invention,
- la figure 5 montre les variations d'un signal relatif à l'uranium contenu dans une solution analysée et d'un rapport uranium/zirconium, pour différentes intensités de courant du tube à rayons X d'un appareil conforme à l'invention, et
- la figure 6 montre des mesures effectuées avec et sans passage d'une phase gazeuse dans la cellule de mesure d'un appareil conforme à l'invention.

### EXPOSÉ DÉTAILLÉ DE MODES DE RÉALISATION PARTICULIERS

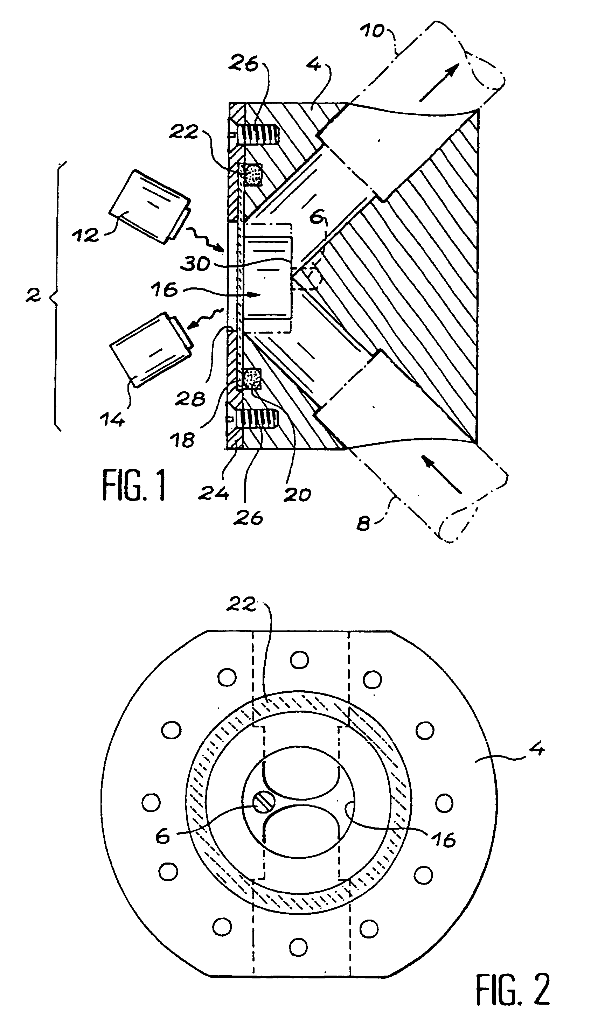

L'appareil utilisé, qui est schématiquement représenté en coupe sur la figure 1, est destiné à l'analyse en ligne d'une solution liquide par fluorescence X.

Cet appareil de la figure 1 comprend :
- des moyens d'excitation et d'analyse 2,
- une cellule de mesure 4, et
- un élément de référence 6.

La cellule de mesure 4 est montée sur une canalisation dans laquelle circule la solution à analyser et dont on voit, sur la figure 1, une partie 8 par laquelle la solution arrive à la cellule de mesure et une autre partie 10 par laquelle la solution sort de cette cellule de mesure.

En ce qui concerne les moyens d'excitation et d'analyse 2, on a seulement représenté sur la figure 1 des moyens 12 d'émission du rayonnement X excitateur (un tube à rayons X) et des moyens 14 de détection du rayonnement X de fluorescence (par exemple un semi-conducteur) que comprennent ces moyens d'excitation et d'analyse.

La cellule de mesure 4 comporte une ouverture 16 qui permet le passage du faisceau de rayonnement X excitateur issu du tube à rayons X 12 et le passage en retour du faisceau de rayonnement X de fluorescence issu des éléments (par exemple des actinides comme l'uranium et le plutonium) qui sont contenus dans la solution à analyser.

Un spectromètre (non représenté) permet d'analyser le rayonnement X de fluorescence détecté par le semi-conducteur 14.

Le diamètre minimal de l'ouverture 16 est déterminé par le diamètre utile du faisceau excitateur et par le diamètre utile du faisceau de fluorescence vu par les moyens de détection.

La cellule de mesure 4 est également munie d'une fenêtre 18 qui est transparente au rayonnement X excitateur, au rayonnement X de fluorescence provenant de la solution et au rayonnement X de référence émis par l'élément 6 lorsque celui-ci reçoit le rayonnement excitateur.

On utilise par exemple une fenêtre en carbure de bore B₄C ou en nitrure de bore BN ou encore en béryllium.

La cellule de mesure 4 est également pourvue d'une rainure circulaire 20 entourant l'ouverture 16.

Un joint torique d'étanchéité 22 est logé dans cette rainure ou gorge 20.

La fenêtre 18 repose contre ce joint.

Cette fenêtre 18 est maintenue dans cette position grâce à une bride 24 qui vient appuyer sur la fenêtre 18 et qui est fixée à la cellule de mesure 4 grâce à des vis 26.

Cette bride 24 comprend une ouverture 28 qui se trouve en regard de la fenêtre 18 et qui est traversée par les rayonnements X d'excitation et de fluorescence, les moyens d'excitation et d'analyse 2 se trouvant en regard de cette ouverture 28.

Le diamètre maximal de l'ouverture 16 que comprend la cellule de mesure 4 est déterminée par la pression maximale qui peut être appliquée dans la cellule compte tenu des caractéristiques mécaniques de la fenêtre 18 transparente aux rayons X.

La section de passage de la solution, au niveau de cette ouverture 16, est suffisamment petite pour permettre un renouvellement rapide de la solution et une homogénéisation rapide de celle-ci lors d'un changement de concentration des éléments présents dans cette solution.

Cette section de passage est de l'ordre de grandeur de la section transversale du conduit d'entrée de solution (partie 8) ou de la section transversale du conduit de sortie de solution (partie 10).

Ceci permet également de minimiser l'encrassement, à l'endroit où se fait la mesure, grâce à une vitesse de fluide plus élevée.

Pour une solution monophasée, les performances de l'appareil de la figure 1, en termes de temps de réponse, à des débits inférieurs à 50 litres par heure, sont conservés.

On notera que la fenêtre 18 par exemple en forme de disque assure également l'étanchéité au niveau de l'ouverture 16 de la cellule de mesure 4 en coopération avec le joint 22.

On précise que le diamètre de l'ouverture 28 de la bride 24 et le diamètre du joint torique 22 sont suffisamment faibles pour permettre une bonne tenue en pression de la cellule de mesure 4.

En outre, la bride 24 a une capacité d'absorption suffisante des rayons X pour éviter l'altération, par ces rayons X, du joint torique 22 assurant l'étanchéité de la cellule de mesure 4.

On notera que le montage et le démontage de la fenêtre 18 et du joint 22 sont aisés, lorsqu'on souhaite intervenir sur la cellule de la mesure 4 (par exemple pour changer cette fenêtre ou ce joint).

Dans le cas d'une analyse à l'aide d'un spectromètre X à dispersion d'énergie, il peut se produire une dérive de l'amplification du signal.

Cette dérive se traduit par un décalage en énergie du spectre de fluorescence X obtenu.

Le fait de disposer d'un pic de référence permet d'observer cette dérive d'amplification et de s'en servir pour recaler le spectre en énergie, notamment les pics issus des raies de fluorescence qui sont proches de la raie de référence.

Le pic de référence est donné par l'élément de référence 6.

Dans l'exemple de la figure 1, cet élément de référence est constitué par une vis (en zirconium pour les exemples donnés plus loin).

Cette vis 6 est fixée à la cellule de mesure, en regard de l'ouverture 16, au fond de la cavité 30 qui est formée dans le corps de la cellule de mesure 4 et qui communique avec les conduits 8 et 10, cette cavité étant pourvue de l'ouverture 16.

La vis 6 reçoit le rayonnement X excitateur et le rayonnement de fluorescence X émis par cette vis 6 est vu par les moyens de détection 14.

Le diamètre de la vis, sa longueur et sa position sont choisis de manière à ce que le signal de fluorescence issu de cette vis soit suffisamment important pour être vu de manière significative par les moyens de détection sans pour autant les saturer.

En variante, au lieu d'une pièce, on pourrait utiliser une poudre d'un matériau approprié (une poudre de zirconium dans les exemples donnés plus loin), encapsulée dans une matière transparente aux rayons X.

Dans le cas d'un spectromètre à dispersion Dans le cas d'un spectromètre à dispersion d'énergie, l'intensité du pic de référence doit être suffisante pour que l'erreur sur le pic due à la statistique de comptage soit au moins inférieure à l'erreur souhaitée sur le résultat.

De plus, l'intensité du pic de référence ne doit pas gêner l'étude des pics des éléments à analyser par des interférences pic à pic ou par un nombre de coups trop important sur les moyens de détection, ce qui entraînerait la saturation de ceux-ci.

Ce pic de référence doit être un pic d'un élément chimique que l'on ne souhaite pas analyser tout en étant proche des pics des éléments dont on cherche les concentrations dans la solution.

Dans le cas d'une analyse d'éléments en faible concentration par fluorescence X avec prise d'échantillon, un élément de référence peut également être placé après les moyens d'excitation et l'échantillon, tout en étant vu par les moyens de détection, de manière à renseigner sur le milieu dans lequel sont les éléments et sur la présence ou non d'une phase gazeuse.

Il est à noter que, suivant la nature du milieu de la solution que l'on souhaite analyser, il est possible d'optimiser les caractéristiques géométriques et la distance de la vis 6 à la fenêtre 18 pour améliorer la sensibilité de détection des variations de densité de ce milieu.

A titre d'exemple, on considère un procédé de retraitement de combustible irradié où l'on souhaite analyser les éléments lourds uranium et plutonium présents en faible concentration dans des milieux aqueux et organique.

Dans ce cas, l'observation des raies de fluorescence X de ces éléments -les raies Lα1 et Lα2- peut permettre une analyse élémentaire.

Les raies Kα1 et Kα2 du zirconium sont suffisamment éloignées des raies Lα des éléments lourds mentionnés plus haut pour que ces raies n'interfèrent pas.

Mais elles en sont suffisamment proches pour apparaître dans la fenêtre d'analyse des moyens de détection et permettre de recaler le spectre en énergie.

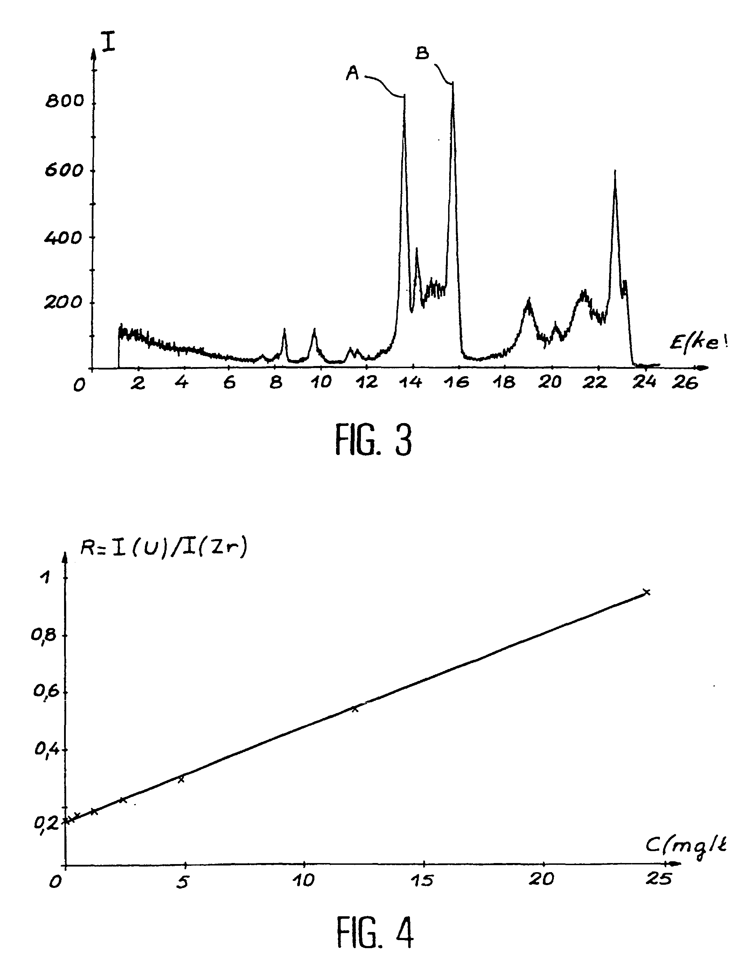

La figure 3 montre le spectre obtenu avec une solution d'uranium irradiée par un flux de photons X issus d'un tube à rayons X.

Sur l'axe des abscisses on a porté les énergies E exprimées en keV et sur l'axe des ordonnées on a porté l'intensité I exprimée en nombre de coups.

Le pic A correspond à l'uranium et le pic B au zirconium.

Les moyens de détection permettant d'obtenir ce spectre comprennent un spectromètre à dispersion d'énergie classique, ou tout type d'appareil permettant de discriminer en énergie les raies (X) des éléments.

Entre l'échantillon et la diode du spectromètre, on trouve un diaphragme d'entrée et un filtre en énergie.

L'élément zirconium servant de référence, est excité par le tube à rayons X.

Il fournit un signal de fluorescence X constant si le tube à rayons X a une intensité constante et si le milieu de varie pas.

S'il n'y a pas de variation du milieu de la solution, un simple rapport de l'intensité du pic à analyser (pic A de l'uranium) sur celle du pic de référence (pic B du zirconium) permet de s'affranchir des fluctuations de la source excitatrice (tube à rayons X).

La mesure de la concentration d'un élément s'effectue par comparaison de solutions étalons.

Dans un premier temps, un étalonnage est effectué avec ces solutions étalons.

Le signal que l'on considère est le rapport de l'intensité de l'élément à doser à l'intensité de l'élément de référence.

Les coefficients de la droite d'étalonnage permettent de déterminer la concentration d'une solution inconnue.

On considère le cas d'un appareil où la source excitatrice est un tube à rayons X.

La figure 4 montre la droite d'étalonnage obtenue en prenant le rapport R de l'intensité du signal de l'uranium I(U) à l'intensité du signal du zirconium I(Zr).

En abscisse on a porté la concentration d'uranium C exprimée en mg/l.

En ordonnée on a porté le rapport R mentionné ci-dessus.

Ce rapport R permet de s'affranchir des fluctuations du tube à rayons X.

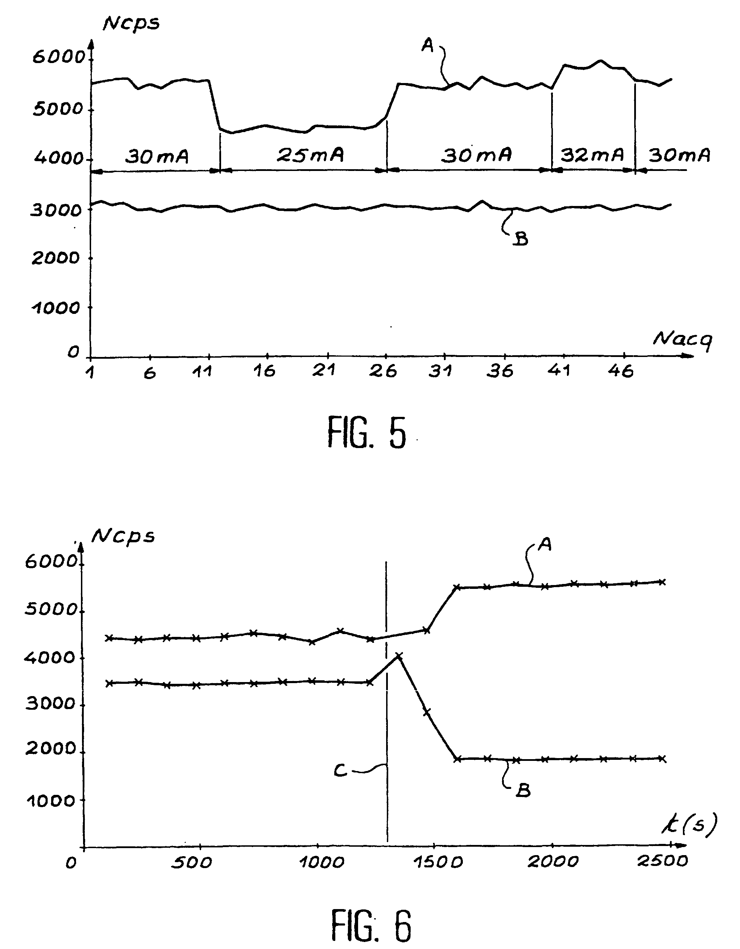

La figure 5 montre les variations de l'intensité relative à l'uranium, exprimée en nombre de coups Ncps, en fonction du numéro de l'acquisition Nacq (courbe A) ainsi que les variations du rapport R mentionné plus haut, multiplié par 10000, en fonction du numéro de l'acquisition (courbe B).

On a également noté sur la figure 5 l'intensité du courant du tube à rayons X (exprimée en mA).

Comme le montre cette figure 5, le signal issu de l'uranium est fonction des variations d'intensité du tube à rayons X.

En revanche, le rapport R reste constant, aux fluctuations statistiques près.

Ce rapport est indépendant des variations d'intensité du tube à rayons X.

Dans le cas de variations de milieu, si celles-ci sont connues, il est possible de faire la même chose pour s'affranchir des variations de la source excitatrice (tube à rayons X).

Il faut néanmoins en tenir compte lors de l'étalonnage qui doit couvrir toutes les gammes de milieux de solution à analyser.

Si la solution n'est pas homogène et comporte une phase gazeuse, les photons X issus du tube à rayons X pénètrent plus profondément dans la solution.

Ils excitent plus intensément l'élément de référence 6 situé au fond de la cavité 30 de la cellule de mesure 4 et les photons X de fluorescence issus de cet élément sont moins absorbés dans la phase gazeuse.

L'intensité du pic de référence est d'autant plus grande.

En revanche, la phase gazeuse ayant pour effet de diminuer la concentration apparente de la solution, l'intensité des raies de fluorescence X des éléments en solution diminue.

Une phase gazeuse en solution a donc des effets opposés sur des intensités des raies de fluorescence X :
- les intensités des raies relatives aux éléments en solution à analyser diminuent,
- les intensités des raies relatives à l'élément de référence augmentent.

L'observation simultanée des intensités de ces raies peut donc renseigner sur les variations de phase de la solution.

C'est un moyen de contrôle permettant de constater la présence d'une phase gazeuse qui peut fausser la mesure.

La figure 6 montre les variations, en fonction du temps t (exprimé en secondes), des signaux (exprimés en nombre de coups Ncps) relatifs à l'uranium (courbe A) et au zirconium (courbe B) ; pour permettre de représenter sur un même graphique les variations des intensités relatives à l'uranium et au zirconium, l'intensité relative au zirconium est divisée par 10.

Les mesures ont été effectuées avec passage d'une phase gazeuse dans la cellule de mesure et sans passage de cette phase gazeuse dans la cellule de mesure.

La ligne verticale C de la figure 6 représente la fin d'introduction de la phase gazeuse.

Ainsi la partie de la figure 6 située à gauche de cette ligne C correspond au passage d'une phase gazeuse dans la cellule de mesure et la partie de la figure 6 située à droite de cette ligne C correspond à l'absence de passage d'une phase gazeuse dans la cellule de mesure.

Cette figure 6 montre les variations, en sens contraires, du signal issu de l'élément à analyser et du signal issu de l'élément de référence, dans le cas où une phase gazeuse est introduite dans la cellule de mesure.

L'invention s'applique aussi à l'analyse par fluorescence X d'une solution contenue dans tout type de conteneur ayant une transparence suffisante aux rayons X d'énergie comprise dans la gamme correspondant aux moyens d'excitation et d'analyse et notamment dans tout récipient classique d'analyse par fluorescence X.

Les documents qui ont été cités dans la présente description sont les suivants :
(1) "Selection and testing of materials for use in a flow-through liquid sampling cell for X-ray fluorescence analysis of special nuclear materials in dissolver solution", C.R. HUDGENS, U.S. DEPARTMENT OF ENERGY, MONSANTO RESEARCH CORPORATION, August 1984
(2) DEMANDE DE BREVET FRANÇAIS n°94 04225 du 11 avril 1994, "Appareil pour l'analyse en ligne de produits fluides polyphasés", M. MERELLI, J. LAVERGNE, G. LAMARQUE, G. MUS, COMMISSARIAT A L'ENERGIE ATOMIQUE = FR-A-2 718 528
(3) "Development of on line energy dispersive X-ray fluorescence to monitor actinide-contamined waste stream", R.S. DAY, A. R. VIGIL, American Nuclear Society, International Topical Conference Methods and Applications of Radioanalytical Chemistry, HAWAII, April 1994
(4) "La spectrométrie de fluorescence X à reflexion totale (TXRF) : une méthode d'avenir pour la micro-analyse d'échantillons radioactifs", Ph. BIENVENU, P. TRABUC, Ph. LLUG, R. JOUEN, CEA CADARACHE, CETAMA, "Analyse non destructive", Recueil des communications présentées au cours des journées techniques des 29 et 30 septembre 1993 au Centre d'études de VALDUC.

## Revendications

1. Procédé d'analyse d'une solution par fluorescence X, dans lequel :
• on excite la solution par un rayonnement X d'excitation, et on analyse un rayonnement X d'analyse émis par la solution ainsi excitée,
• on utilise des moyens (4, 8, 10) de réception de la solution, ces moyens de réception comprenant au moins une zone (18) qui est transparente aux rayonnements X d'excitation et d'analyse et qui est traversée par ceux-ci, et
• on utilise un élément de référence (6) extérieur à la solution, rendu solidaire des moyens de réception, placé en regard de ladite zone de façon que la solution se trouve entre cette zone et cet élément, et apte à émettre un rayonnement X de référence distinct du rayonnement X d'analyse lorsque cet élément reçoit le rayonnement d'excitation, ladite zone étant transparente au rayonnement de référence,
ce procédé étant **caractérisé en ce que** ce rayonnement X de référence est analysé avec le rayonnement X d'analyse et utilisé pour remédier aux dérives de mesure susceptibles de se produire pendant l'analyse de la solution.

2. Procédé selon la revendication 1, **caractérisé en ce que** les moyens de réception comprennent une canalisation (8, 10) dans laquelle circule la solution et qui est munie d'une fenêtre (18) transparente aux rayonnements X d'excitation, d'analyse et de référence, cette fenêtre constituant ladite zone, l'élément de référence étant rendu solidaire de cette canalisation.

3. Procédé selon la revendication 2, **caractérisé en ce que** la canalisation est munie d'une cellule de mesure (4) destinée à être traversée par la solution et portant la fenêtre (18), l'élément de référence (6) étant rendu solidaire de cette cellule de mesure.

4. Procédé selon la revendication 3, **caractérisé en ce que**, à l'endroit où se trouve la fenêtre (18), la cellule de mesure (4) a une faible section de passage pour la solution.

5. Procédé selon la revendication 1, **caractérisé en ce que** les moyens de réception comprennent un conteneur qui est destiné à contenir la solution et qui est fait d'un matériau transparent aux rayonnements X d'excitation, d'analyse et de référence.

6. Procédé selon la revendication 5, **caractérisé en ce que** ce conteneur est un récipient d'analyse par fluorescence X.

7. Procédé selon l'une quelconque des revendications 1 à 6, **caractérisé en ce que** l'élément de référence est une pièce mécanique (6) faite d'un matériau métallique.

8. Procédé selon la revendication 7, **caractérisé en ce que** cette pièce est une vis (6).

9. Procédé selon l'une quelconque des revendications 7 et 8, **caractérisé en ce que** le matériau est le zirconium.

## Patentansprüche

1. Verfahren zur Röntgenstrahl-Fluoreszenzanalyse einer Lösung wie folgt:
• man erregt die Lösung durch einen Erregungs-Röntgenstrahl und man analysiert einen von der derart erregten Lösung emittierten bzw. abgestrahlten Analyse-Röntgenstrahl,
• man benutzt Aufnahmeeinrichtungen (4, 8, 10) der Lösung, wobei diese Aufnahmeeinrichtungen wenigstens eine Zone (18) umfassen, die durchlässig ist für die Erregungs- und Analyse-Röntgenstrahlen und die von diesen durchquert wird, und
• man benutzt ein außerhalb der Lösung befindliches, mit den Aufnahmeeinrichtungen verbundenes Bezugselement (6), das der genannten Zone so gegenübersteht, dass die Lösung sich zwischen dieser Zone und diesem Element befindet, und das fähig ist, einen sich von dem Analyse-Röntgenstrahl unterscheidenden Bezugs-Röntgenstrahl zu emittieren bzw. abzustrahlen, wenn dieses Element den Erregungs-Röntgenstrahl empfängt, wobei die genannte Zone durchlässig ist für den Bezugsstrahl und dieses Verfahren dabei **dadurch gekennzeichnet ist, dass** der Bezugs-Röntgenstrahl mit dem Analyse-Röntgenstrahl analysiert wird und benutzt wird, um den Messabweichungen zu begegnen, die sich während der Analyse der Lösung möglicherweise ereignen.

2. Verfahren nach Anspruch 1, **dadurch gekennzeichnet, dass** die Aufnahmeeinrichtungen eine Leitung (8, 10) umfassen, in der die Lösung zirkuliert und die mit einem für die Erregungs-, Analyse- und Bezugs-Röntgenstrahlen durchlässigen Fenster (18) versehen ist, wobei dieses Fenster die genannte Zone bildet und das Bezugselement mit dieser Leitung verbunden ist.

3. Verfahren nach Anspruch 2, **dadurch gekennzeichnet, dass** die Messleitung (4) mit einer Messzelle (4) versehen ist, die von der Lösung durchquert wird und das Fenster (18) umfasst, wobei das Bezugselement (6) mit dieser Messzelle verbunden ist.

4. Verfahren nach Anspruch 3, **dadurch gekennzeichnet, dass** an der Stelle, wo sich das Fenster (18) befindet, die Messzelle (4) einen kleinen Durchflussquerschnitt für die Lösung aufweist.

5. Verfahren nach Anspruch 1, **dadurch gekennzeichnet, dass** die Aufnahmeeinrichtungen einen Behälter umfassen, der die Lösung enthält und aus einem für die Erregungs-, Analyse- und Bezugsstrahlen durchlässigen Material ist.

6. Verfahren nach Anspruch 5, **dadurch gekennzeichnet, dass** dieser Behälter ein Röntgenstrahl-Fluoreszenzanalyse-Rezipient ist.

7. Verfahren nach einem der Ansprüche 1 bis 6, **dadurch gekennzeichnet, dass** das Bezugselement ein aus einem metallischen Material gefertigtes mechanisches Teil (6) ist.

8. Verfahren nach Anspruch 7, **dadurch gekennzeichnet, dass** dieses Teil eine Schraube (6) ist.

9. Verfahren nach einem der Ansprüche 7 und 8, **dadurch gekennzeichnet, dass** dieses Material Zirkonium ist.

## Claims

1. Process for the analysis of a solution by X-ray fluorescence, wherein:
the solution is excited by an excitation X-radiation and an analysis X-radiation emitted by the thus excited solution is analyzed,
use is made of means (4, 8, 10) for receiving the solution, these receiving means including at least one area (18) which is transparent to the excitation and analysis X-radiation which pass through it, and
use is made of a reference element (6) exterior to the solution, integral with the receiving means, positioned opposite said area in such a way that the solution is between this area and this element, and capable of emitting a reference X-radiation distinct from the analysis X-radiation when this
element receives the excitation radiation, said area being transparent to the reference radiation, said process being **characterized in that** this reference X-radiation is analyzed with the analysis X-radiation and used for preventing measurement drift that is liable to occur to be corrected during the analysis of the solution.

2. Process according to claim 1, **characterized in that** the receiving means include a flow line (8, 10) within which the solution circulates and which is provided with a window (18) transparent to the excitation, analysis and reference X-radiation, this window constituting said area, the reference element being made integral with this flow line.

3. Process according to claim 2, **characterized in that** the flow line is provided with a measurement cell (4) which the solution is intended to pass through and having the window (18), the reference element being made integral with this measurement cell.

4. Process according to claim 3, **characterized in that** at the place where the window (18) is, the measurement cell (4) has a small cross-sectional area through which the solution passes.

5. Process according to claim 1, **characterized in that** the receiving means include a container which is intended to contain the solution and which is made of a material transparent to the excitation, analysis and reference X-radiation.

6. Process according to claim 5, **characterized in that** this container is an X-ray fluorescence analysis receptacle.

7. Process according to any one of the claims 1 to 6, **characterized in that** the reference element is a mechanical component (6) made of a metallic material.

8. Process according to claim 7, **characterized in that** this component is a screw (6).

9. Process according to either of the claims 7 and 8, **characterized in that** the material is zirconium.
